# EUROPEAN PATENT APPLICATION

(11) **EP 0 545 601 A1**
(43) Date of publication of application: **09.06.1993**
(21) Application number: 92310722.1
(22) Date of filing: 24.11.1992
(51) Int. Cl.: A23L 1/318, A23B 4/12

(54) **Use of a food marinade**

(30) Priority: 28.11.1991 GB 9125315
(71) Applicant: UNILEVER PLC, London EC4P 4BQ (GB); UNILEVER N.V., NL-3013 AL Rotterdam (NL)
(72) Inventor: Hodges, Rosalind Clare, Sharnbrook, Bedford MK44 1LQ (GB)
(74) Representative: Roscoe, Brian Corrie

(57) **Abstract**

The use of a marinading composition comprising tannins, with the exception of wine, to increase the firmness of uncooked meat of mammals, poultry or fish.

## Description

### FIELD OF THE INVENTION

The invention relates to the use of a marinading composition comprising tannins to increase advantageously the firmness of uncooked meat of mammals, poultry or fish.

### BACKGROUND TO THE INVENTION

Marinading or marination has been used for many years to tenderise and improve the flavour of uncooked meat, particularly the lower quality types of meat that usually have a tougher texture. Primarily marinading was a process of preserving uncooked meat by pickling.

The basic ingredients in a marinading composition are oil, seasoning, flavouring agents and an acid, which may be vinegar, fruit juices or wine. Sometimes sucrose is added to enhance the tenderness of the meat and to mellow the sharpness of the acid.

Also enzymes, like protease, ficin, bromelin and papain have been used for the purpose of promoting tenderisation. Various combinations of enzymes are used and these may contain flavouring and seasoning agents and also small amounts of acid, usually in the form of vinegar, to stabilise such solutions.

The two usual methods of marinading are dipping the meat into the marinading solution or by injection of a marinading solution into the meat cut, or combinations of these two methods. Meat is usually marinaded for 1-24 hours, but sometimes even up to 3 days, whereas in fish marinading at 10-15°C (so-called cold marinading) periods of 4-6 days are normal.

The disadvantage of enzymatic marinading is that at a certain point in the treatment of the meat, the enzymes need to be inactivated. Also after longer marinading treatments the meat upon cooking exhibits a dull grey colour and/or iridescent shine on the surface.

It has now been found that on marinading uncooked meat in the presence of added tannins or tannic acid, the firmness of the meat is markedly increased, so that upon subsequent sterilisation less collagen is solubilised. It is known that wine, particularly red wine, which is also used in marinading, does contain tannins, but when uncooked meat was treated with red wine, its firmness was not improved.

### SUMMARY OF THE INVENTION

Accordingly the invention provides for the use of a marinading composition comprising tannins, with the exception of wine, to increase the firmness of uncooked meat of mammals, poultry or fish.

### DISCLOSURE OF THE INVENTION

Tannins are a group of plant polyphenols which are generally divided into the hydrolysable and the condensed tannins (also called flavonoid tannins). The former group is hydrolysed by acids or enzymes to simple units, while the latter group is converted into more complex, insoluble, coloured products. The hydrolysable tannins may be further subdivided into two groups: the gallotannins, forming gallic acid upon hydrolysis and the ellagitannins, which upon hydrolysis give a sugar, ellagic acid and related acids.

In the practice of the present invention the tannins are preferably chosen from hydrolysable tannins, tannic acid, and mixtures thereof.

An example of hydrolysable tannins are the tannins from green or black tea.

The amount of tannin within the marinading composition is preferably from 0.1 to 15% by weight, more preferably from 0.25% to 10% by weight, based on the weight of the marinading composition.

The amount of tannin based on the weight of the meat treated, is preferably from 0.4 to 30% by weight, more preferably from 1% to 25% by weight.

The uncooked meat which can be treated according to the present invention is the meat of mammals, such as beef, pork or lamb; the meat of poultry, such as turkey and chicken and the meat of fish. Also mixtures of various types of uncooked meat may be used and the meat may comprise extenders and additives and may also have been subjected to pre-treatments.

The marinading composition according to the present invention may also comprise salts, such as common salt, alkali metal phosphates, alkali metal nitrates, and the like; flavouring agents, preferably savoury flavouring agents; tomato paste; water; herbs, such as thyme, parsley and garlic; spices, such as mustard, cloves and nutmeg; sugar; colouring agents; vitamins; acids, like vinegar, lemon juice, red or white wine, ascorbic acid; vegetables, such as onions and mushrooms; gelatin; proteins and mixtures of these substances.

The use of a marinading composition according to the invention provides advantageous firming of the meat. Thus when this meat is subsequently sterilised, for example as an ingredient within a canned meat product, the meat does not become soft and is therefore more acceptable to the consumer.

The invention will now be illustrated by the following examples:

### Example 1

A sample of 145 grams of uncooked beef was cut into cubes with an edge of 1 cm, which were marinaded with a marinading solution of 0.06 grams of tannic acid in 25 ml of distilled water, using a weight ratio of beef to marinading solution of 1:3 at 2°C for 16 hours in a tumbler, which was rotated at 10 rpm for 5 minutes in every hour.

The sample obtained was canned in distilled water (40 ml of water with 72 grams of marinaded meat) and were subsequently sterilised in a pressure cooker for 30 minutes at 15 psi (1.034 bar).

After sterilisation, texture measurements were carried out, using a Lloyd 500 with a Warner-Bratzler shear cell. The Warner-Bratzler blade (50°) is aligned in grooves and was pushed into a slot. Across the slot the meat sample was placed and as the blade moves down it cuts the sample of the meat in half. A maximum force value of 78.0 Newton was obtained for the marinaded, sterilised beef sample, whereas a non-marinaded, sterilised control sample of the same beef showed a value of 36.67 Newton.

From this example the markedly improved firmness is clear.

### Examples 2 to 4

Chicken thigh muscle, pork meat and salmon were each sliced into cubes with an edge of 1 cm, which were then marinaded. In each case 145 grams of cubes were marinaded in 435 ml of marinading solution comprising 0.24% by weight of tannic acid in a vacuum packed bag for 16 hours at 2°C and atmospheric pressure. The bag was placed in a tumbler, which was rotated at 10 rpm for 5 minutes in every hour. The samples obtained were canned in distilled water (72 grams of each sample in 40 ml of water) and the cans were sterilised for 30 minutes in a pressure cooker at 15 psi (1.034 bar).

The texture measurements were then carried out as described in Example 1 with the following results:

| **EXAMPLE** | **MATERIAL** | **MAXIMAL FORCE VALUE (N)** | |
|---|---|---|---|
| | | **CONTROL** | **MARINADED SAMPLE** |
| 2 | chicken meat | 12.38 | 18.58 |
| 3 | pork meat | 23.18 | 32.30 |
| 4 | salmon meat | 11.64 | 16.90 |

All the marinaded samples therefore were significantly harder than the controls, thus demonstrating the beneficial effect of the present invention.

## Claims

1. The use of a marinading composition comprising tannins, with the exception of wine, to increase the firmness of uncooked meat of mammals, poultry or fish.

2. The use of a marinading composition according to claim 1 wherein the tannins are selected from hydrolysable tannins, tannic acid, and mixtures thereof.

3. The use of a marinading composition according to claims 1 and 2 characterised in that the marinading composition comprises from 0.1% to 15% by weight, based on the weight of the marinading composition, of the tannins.

4. The use of a marinading composition according to any preceding claim characterised in that the marinading composition comprises from 0.25% to 10% by weight, based on the weight of the marinading composition, of the tannins.
